(19) Europäisches Patentamt
European Patent Office
Office européen des brevets

(11) **EP 3 538 440 B1**

## (12) EUROPEAN PATENT SPECIFICATION

(45) Date of publication and mention
of the grant of the patent:
**15.07.2020 Bulletin 2020/29**

(21) Application number: **17809017.1**

(22) Date of filing: **08.11.2017**

(51) Int Cl.:
**B64D 45/02** (2006.01)

(86) International application number:
**PCT/IB2017/056983**

(87) International publication number:
**WO 2018/087671 (17.05.2018 Gazette 2018/20)**

(54) **SIGNAL RETURN NETWORK FOR COMPOSITE AIRCRAFT**

SIGNALRÜCKLAUFNETZWERK FÜR COMPOSITE-FLUGZEUG

RÉSEAU DE RETOUR DE SIGNAL POUR AÉRONEF COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2016 US 201662420613 P**

(43) Date of publication of application:
**18.09.2019 Bulletin 2019/38**

(73) Proprietors:
• **Bombardier Inc.**
  **Dorval, Québec H4S 1Y9 (CA)**
• **Short Brothers Plc**
  **Belfast BT3 9DZ (GB)**
  Designated Contracting States:
  **MT**

(72) Inventors:
• **MOUPFOUMA, Fidele**
  **Beaconsfield, Québec H9W 2P9 (CA)**
• **NDOYE, Amadou Cisse**
  **Montreal, Québec H4K 2M4 (CA)**
• **JALALI, Mohsen**
  **Dollard-Des-Ormeaux, Québec H9A 1T6 (CA)**

(74) Representative: **Holmes, Matthew William**
**Cawston Field IP Ltd.**
**Hillside**
**Main Street**
**Frankton, Warwickshire CV23 9PB (GB)**

(56) References cited:
**US-A1- 2006 146 473    US-A1- 2010 127 564**
**US-A1- 2010 213 312    US-A1- 2011 259 999**

**Description**

**CROSS-REFERENCE TO RELATED APPLICATION(S)**

**TECHNICAL FIELD**

The present disclosure relates generally to electromagnetic threat protection in composite aircraft, and more specifically to signal return networks. US2010/213312 discloses systems and methods to distribute power in a system having a composite structure. A particular aircraft includes a fuselage having a composite skin with a first resin and a plurality of fibers. The fuselage also includes an expanded conductive patch bonded to an interior surface of the composite skin by a second resin. The expanded conductive patch is in electrical contact with the plurality of fibers. The fuselage also includes a connector in electrical contact with the expanded conductive patch. US2006/146473, US2011/259999 and US2010/127564 disclose further known signal return networks.

**BACKGROUND**

Unlike most ground vehicles, aircraft do not offer a direct path to ground when struck by lightning or other large electrical discharges. Rather, when lightning strikes an aircraft with a metal fuselage, the electrical current will travel over an outside of a body of the aircraft, which acts as a Faraday cage, and be transmitted to another cloud or other element. In this way, the metal fuselage can also act as a ground plane for any electrical systems onboard the aircraft. However, aircraft with composite fuselage do not provide the same Faraday cage-like behaviour: since composite materials are poor conductors, lightning can damage the composite fuselage if not provided a current path. Moreover, a composite fuselage cannot act as a ground plane for electrical systems.

Therefore, many existing composite aircraft provide a pair of networks for addressing these issues: a lightning network for routing lightning through the aircraft, and a signal return network which serves as a ground plane for onboard electrical systems. Following a lightning strike on a composite aircraft, a current develops on the composite surface of the aircraft, which generates a derivative current on the signal return network. The derivative current generated by a lightning strike on the aircraft can induce further currents in the electrical systems, potentially affecting systems' immunity, or causing damage to the electrical systems. This results in higher shielding requirements for onboard cabling to the electrical systems to protect against the induced currents, increasing aircraft weight.

As such, there is a need for improved signal return network designs.

**SUMMARY**

The present disclosure provides an aircraft according to claim 1. A signal return network is spaced from a composite structure and first and second non-conductive components are attached between the signal return network and the composite structure at first and second attachment points, respectively. A conductive component is attached between the signal return network and the composite structure at a third attachment point for electrically coupling the signal return network to the composite structure. The conductive component electrically couples the signal return network to the composite structure, providing a path for electrical currents travelling along the surface of the composite structure toward the signal return network.

In accordance with an aspect, there is provided an aircraft, comprising: a composite structure; a signal return network spaced from the composite structure; a first non-conductive component attached between the signal return network and the composite structure at a first attachment point; a second non-conductive component attached between the signal return network and the composite structure at a second attachment point; and a conductive component attached between the signal return network and the composite structure at a third attachment point for electrically coupling the signal return network to the composite structure to split the conductive path current into first and second signal return network currents which are routed though the signal return network in opposite directions toward at least one electrical system of the aircraft, wherein the conductive component is a sole electrical path from the composite structure to the signal return network and wherein the remainder of the signal return network is electrically floating.

In some embodiments, the third attachment point is located substantially at a midpoint of the signal return network.

In some embodiments, the first and second attachment points are respectively located at first and second ends of the signal return network.

In some embodiments, the aircraft further comprises: at least one electrical system located within the aircraft; and at least one electrical connector for electrically coupling the electrical system to the signal return network.

In some embodiments, the signal return network is spaced at least 25.4 mm (one inch) from the composite structure.

In some embodiments, an impedance of the composite structure is less than an impedance of a path including the conductive component and the signal return network as viewed from the third attachment point.

In some embodiments, an impedance of the signal return network between the third attachment point and the first attachment point is substantially equal to an impedance of the signal return network between the third attachment point and the second attachment point.

In some embodiments, a total magnetic flux $\phi_{TOT}$ generated in a closed electrical loop of the signal return network and a cable connected to the signal return network, the cable having a shielding and a core, is defined as

$\phi_{TOT} = M_{sh/srn} \times \ell \times \frac{I_{SRN}}{2}$, where $M_{sh/snr}$ is a mutual inductance between the cable shielding and the signal return network, $\ell$ is the length of the signal return network, and $I_{SRN}$ is a current received by the signal return network.

In some embodiments, a time-varying voltage induced in the cable core $V_{inc}(t)$ is defined as

$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}} \cdot t}$, where t is time, $R_{sh}$ is a cable shielding transfer resistance, $L_{sh}$ is a cable shielding transfer inductance, $M_{sh/c}$ is a mutual inductance between the cable shielding and the cable core, $I_{SRN}(0)$ is a current in the signal return network at a time $t = 0$.

In accordance with another aspect, there is provided a system for reducing current flow to at least one electrical system of an aircraft, comprising: a composite structure for receiving an electrical current; a conductive component attached to the composite structure for splitting the electrical current into a structure current travelling along the composite structure and a conductive path current travelling along the conductive component; a signal return network spaced from the composite structure and attached to the conductive component to electrically couple the signal return network to the composite structure to split the conductive path current into first and second signal return network currents which are routed through the signal return network in opposite directions toward the at least one electrical system; and first and second non-conductive components attached between the signal return network and the composite structure at first and second attachment points, respectively; wherein the conductive component is a sole electrical path from the composite structure to the signal return network and wherein the remainder of the signal return network is electrically floating.

In some embodiments, the signal return network is attached to the conductive component at a third attachment point located substantially at a midpoint of the signal return network.

In some embodiments, the first and second attachment points are respectively located at the first and second ends of the signal return network.

In some embodiments, the signal return network is spaced at least 25.4 mm (one inch) from the composite structure.

In some embodiments, an impedance of the composite structure is less than an impedance of a path including the conductive component and the signal return network as viewed from the third attachment point.

In some embodiments, an impedance of the signal return network between the conductive component and the first attachment point is substantially equal to an impedance of the signal return network between the conductive component and the second attachment point.

In some embodiments, a total magnetic flux $\phi_{TOT}$ generated in a closed electrical loop of the signal return network and a cable connected to the signal return network, the cable having a shielding and a core, is defined as

$\phi_{TOT} = M_{sh/srn} \times \ell \times \frac{I_{SRN}}{2}$, where $M_{sh/snr}$ is a mutual inductance between the cable shielding and the signal return network, $\ell$ is the length of the signal return network, and $I_{SRN}$ is a current received by the signal return network.

In some embodiments, a time-varying voltage induced in the cable core $V_{inc}(t)$ is defined as

$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}} \cdot t}$, where t is time, $R_{sh}$ is a cable shielding transfer resistance, $L_{sh}$ is a cable shielding transfer inductance, $M_{sh/c}$ is a mutual inductance between the cable shielding and the cable core, $I_{SRN}(0)$ is a current in the signal return network at a time $t = 0$.

Features of the systems and devices described herein may be used in various combinations, and may also be used for the system and computer-readable storage medium in various combinations unless they depart from the scope of the appended claims.

## BRIEF DESCRIPTION OF THE DRAWINGS

Further features and advantages of embodiments described herein may become apparent from the following detailed description, taken in combination with the appended drawings, in which:

Figure 1 is a diagram of an example aircraft.

Figure 2 is a diagram of a signal return network design according to an embodiment.

Figures 3A-D is a current flow diagram based on the signal return network design of Figure 2.

Figure 4 is circuit diagram of the signal return network design of Figure 2.

Figure 5 is a chart of example frequency responses of aircraft to exterior currents.

Figure 6 is a block diagram representation of the signal return network of Figure 2.

Figure 7 is a flowchart of a method for reducing current flow to at least one electrical system of an aircraft.

It will be noted that throughout the appended drawings, like features are identified by like reference numerals.

## DETAILED DESCRIPTION

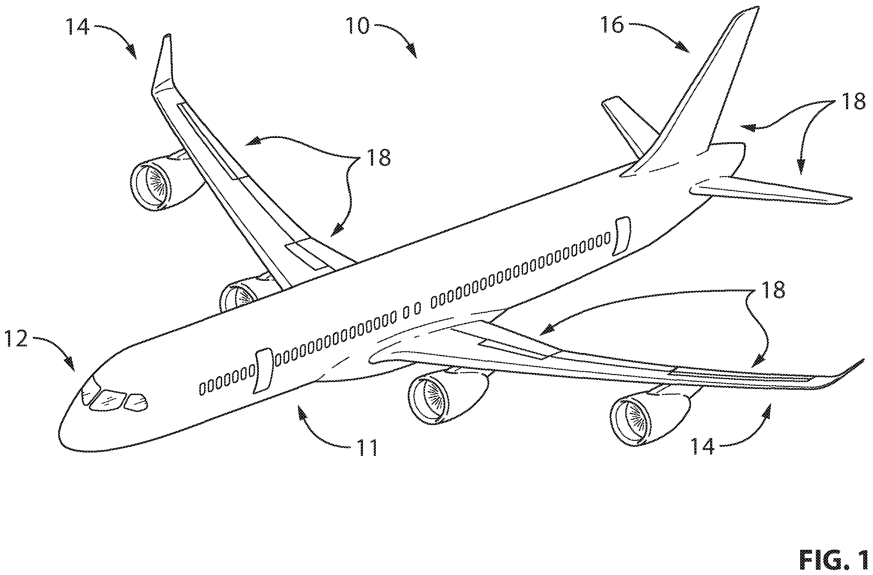

With reference to Figure 1, an aircraft 10, having a fuselage 11, a pair of wings 14, and a tail 16, is equipped with a cockpit 12 and one or more flight components 18. The aircraft 10 can be any type of aircraft, including propeller planes, jet planes, turbojet planes, turbo-propeller planes, turboshaft planes, gliders, and the like. The cockpit 12 may be positioned at any suitable location on the aircraft 10, for example at a front portion of the fuselage 11. The cockpit 12 is configured for accommodating one or more pilots who control the aircraft 10 by way of one or more operator controls (not illustrated). The operator controls may include any suitable number of pedals, yokes, steering wheels, centre sticks, flight sticks, levers, knobs, switches, and the like.

The fuselage 11 is a composite fuselage which can be made from one or more composite materials, including fiberglass, carbon fiber, polymers, glass, and the like. In certain embodiments, the fuselage is made of a plurality of layers of composite materials. The wings 14 and the tail 16 can also be made of any one or more composite materials, which may be the same material(s) as used for the fuselage 11, or may be a different material or composition of materials.

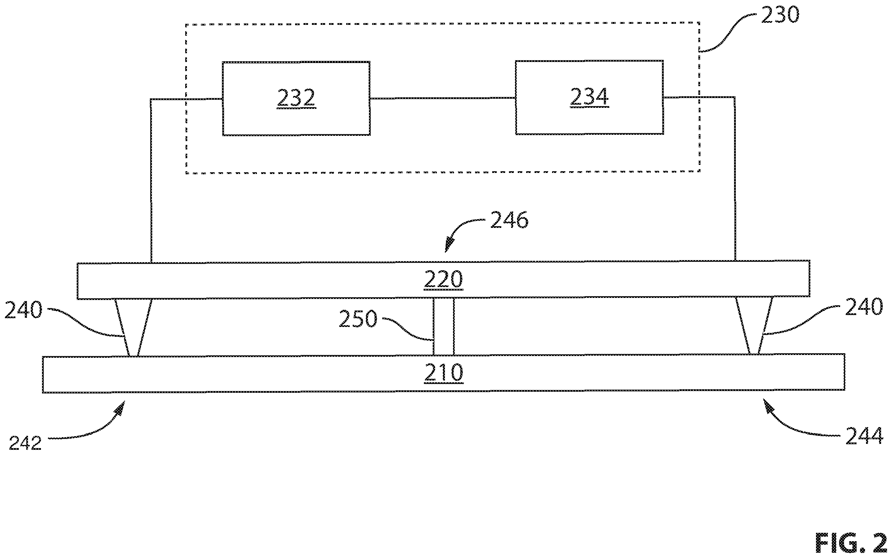

With reference to Figure 2, the aircraft 10 can be designed to provide a signal return network for reducing current flow to at least one electrical system of the aircraft 10. More specifically, a signal return network 220 is spaced from a composite structure 210 of the aircraft 10. The composite structure 210 can be the fuselage 11 or a portion thereof, one or more of the wings 14 or a portion thereof, the tail 16 or a portion thereof, or any suitable combination thereof. The signal return network 220 can be a line, mesh or other structure made of any suitably conductive material. In some embodiments, the signal return network 220 is a metallic line made of copper, for example. The signal return network 220 is spaced from the composite structure 210 by any suitable distance, for example at least 25.4 mm (one inch).

A pair of non-conductive components 240 are attached between the signal return network 220 and the composite structure 210. The non-conductive components 240 are used to secure the signal return network 220 to the composite structure 210. A first of the non-conductive components 240 is located at a first attachment point 242, and a second of the non-conductive components 240 is located at a second attachment point 244. The first and second attachment points 242, 244, can be located at substantially opposite ends of the signal return network 220, or at any other suitable position. The non-conductive components 240 can be any component suitable for securing the signal return network 220 to the composite structure 210, for example supports made of plastic or other dielectrics. Although only two non-conductive components 240 are illustrated, it should be understood that any suitable number of non-conductive components can be attached between the signal return network 220 and the composite structure 210.

Additionally, a conductive component 250 is attached between the signal return network 220 and the composite structure 210 at a third attachment point 246. The conductive component 250 can be made of a conductive metal, such as copper, silver, aluminum, or of any other suitably conductive material which allows for electrically coupling the signal return network 220 to the composite structure 210. The third attachment point 246 may be located at a midpoint of the signal return network 220, at a midpoint between the first and second attachment points 242, 244, or at any other suitable position relative to the signal return network 220 and/or the first and second non-conductive components 240. In short, the conductive component 250 acts as the conductive path between the composite structure 210 and the signal return network 220, with the remainder of the signal return network 220 electrically floating with respect to the composite structure 210.

The aircraft 10 also includes one or more electrical systems 230 - shown here as electrical system 232 and 234 - which are electrically coupled to the signal return network 220, and use the signal return network 220 as a ground plane. The electrical systems 230 can be coupled to the signal return network 220 using any suitable connection means, for example cable bundles or shielded cabling, and may be interconnected in any suitable way. For example, each of the electrical systems 230 can be connected to the signal return network 220 via one or more wires welded, bonded, or otherwise connected to the signal return network 220.

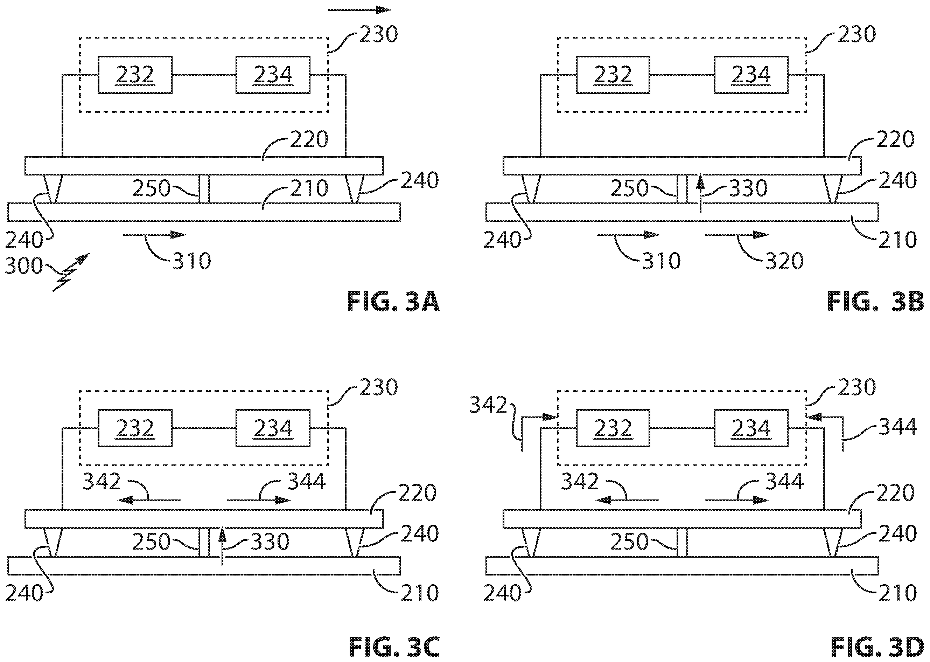

With reference to Figures 3A-D, a series of current flow diagrams is shown. In Figure 3A, an exterior current 300, for example a lightning bolt, strikes the composite structure 210, causing a first structure current 310 to travel along the composite structure 210. In certain cases, the first structure current 310 travels along a surface of the composite structure 210. In other cases, the first structure current 310 travels through the composite structure 210. In still other cases, the first structure current 310 can travel both along the surface of the composite structure 210 and through the composite structure 210.

In Figure 3B, upon reaching the conductive component 250, the first structure current 310 splits into a second structure current 320 and a conductive path current 330. The second structure current 320 continues along the surface of and/or through the composite structure 210, and the conductive path current 330 travels along the conductive component 250 from the composite structure 210 to the signal return network 220. In some embodiments, the conductive path current 330 is smaller in magnitude than the second structure current 320. In other embodiments, the conductive path current 330 and the second structure current 320 have substantially similar magnitudes.

In Figure 3C, upon reaching the signal return network 220, the conductive path current 330 is split into first and second signal return network currents 342, 344. The first and second signal return network currents 342, 344 travel along the signal return network 220 in opposite directions, and have magnitudes proportional to the portion of the signal return network 220 along which the first and second signal return network currents 342, 344 travel. For example, if the third attachment point 246 where the conductive component 250 is located is at a midpoint of the signal return network 220, the first and second signal return network currents 342, 344 will each travel along roughly half of the signal return network 220. Both halves of the signal return network 220 will have substantially equal impedances, and thus the first and second signal return network currents 342, 344 will have substantially equal magnitudes being roughly half of the magnitude of the conductive path current 330.

In Figure 3D, the first and second signal return network currents 342, 344 travel along the signal return network 220 to the electrical systems 230. Because the first and second signal return network currents 342, 344 travel in opposite directions, the first and second signal return network currents 342, 344 will produce opposite induced currents in the electrical systems 230, thereby reducing the overall current to which the electrical systems 230 are subjected.

Thus, because the signal return network 220 is electrically coupled to the composite structure 210 via the conductive component 250 and is otherwise electrically floating, any current travelling along the conductive component 250 to the signal return network 220 is split in two parts - namely first and second signal return network currents 342, 344 - which will at least partially counteract when inducing currents in the electrical systems 230. In certain embodiments, the induced currents may be up to 6 dB (decibel) lower than those to which the electric systems 230 may be subjected in aircraft where the signal return network 220 is connected to the composite structure 210 at multiple points.

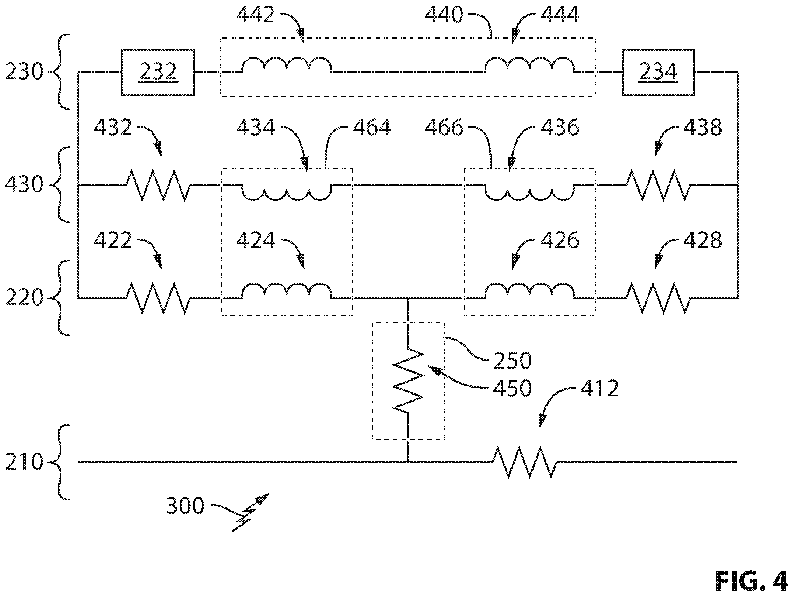

With reference to Figure 4, a circuit diagram is provided to illustrate the embodiment of Figure 2. Here, the composite structure 210 is modelled as a resistor 412; the conductive component 250 is modelled as a resistor 450; the signal return network 220 is modelled as two branches split about the third attachment point 246, each having a resistor 422, 428 and an inductor 424, 426; a cable shielding 430 for cabling leading to the electrical systems 230 is modelled as two resistor-inductor pairs 432, 434 and 436, 438; and a cable core 440 for the cabling is modelled as two inductors 442, 444. A mutual inductance 464 develops between the inductors 424 and 434, that is between a first branch of the signal return network 220 and a first branch of the cable shielding 430. Similarly, a second mutual inductance 466 develops between the inductors 426 and 436, that is between a second branch of the signal return network 220 and a second branch of the cable shielding 430.

As discussed hereinabove, the exterior current 300 reaches the conductive component 250 and splits to send the conductive path current 330 through the conductive component 250 toward the signal return network 220. The conductive path current 330 then splits as it enters the signal return network 220 according to equation (1):

$$I_{\text{CP}} = I_{\text{SNR1}} + I_{\text{SNR2}} \qquad (1)$$

where $I_{\text{CP}}$ is the conductive path current 330, $I_{\text{SNR1}}$ is the first signal return network current 342, and $I_{\text{SNR2}}$ is the second signal return network current 344.

Due to the direction of the currents $I_{\text{SNR1}}$ and $I_{\text{SNR2}}$, two magnetic fluxes will develop in the closed loop of the signal return network 220 and the cable shielding 430, according to equation (2) and (3):

$$\phi_1 = L_{sh} \times length \times (I_{\text{SNR1}} - I_{\text{SNR2}}) + \frac{length}{2} M_{sh/sn} I_{\text{SNR2}} \qquad (2)$$

$$\phi_2 = L_{sh} \times length \times (I_{\text{SNR2}} - I_{\text{SNR1}}) + \frac{length}{2} M_{sh/sn} I_{\text{SNR1}} \qquad (3)$$

where $\phi_1$ and $\phi_2$ are the first and second magnetic fluxes, respectively, $L_{sh}$ is the inductance of the cable shielding 430, modelled as inductors 434 and 436, *length* is the length of the signal return network 220, and $M_{sh/sn}$ is the mutual inductance coupling between the signal return network 220 and the cable shielding 430, shown as elements 464 and 466.

These fluxes can be expressed as a sum, as in equation (4):

$$\sum_{i=1}^{2} \phi_i = M_{sh/sn} \times \frac{length}{2} \times (I_{\text{SNR2}} + I_{\text{SNR1}}) = \phi_{Tot} \qquad (4)$$

where $\phi_{Tot}$ is a total magnetic flux.

In embodiments where the third attachment point 246 is located substantially at a midpoint of the signal return network 220, the first and second signal return network currents 342, 344 will be substantially equal, since the first and second branches of the signal return network 220 will present a substantially equivalent impedance. Thus,

$$I_{\text{SNR1}} = I_{\text{SNR2}} = \frac{I_{\text{CP}}}{2} \qquad (5)$$

and equation (4) can be rewritten as

$$\sum_{i=1}^{2} \phi_i = \phi_{Tot} = M_{sh/sn} \times length \times \frac{I_{\text{CP}}}{2} \qquad (6)$$

and magnetic flux $\phi_{Tot}$, which produces an induced current on the cable shielding 430 by the mutual inductances 464, 466 between the signal return network 220 and the cable shielding 430, is proportional to half the conductive path current 330.

The time-variant current induced on the cable shielding $I_{sh}(t)$ can be expressed as equation (7):

$$I_{sh}(t) = I_{\text{CP}}\, e^{\left(-\frac{R_{sh}}{L_{sh} - M_{sh/sn}} \cdot t\right)} \qquad (7)$$

where t is time, $R_{sh}$ is the cable shielding transfer resistance, and $L_{sh}$ is the cable shielding transfer inductance. In equation (7), $L_{sh} - M_{\frac{sh}{sn}} > 0$.

Based on equations (6) and (7), the time-varying voltage developed on the cable core 440 via magnetic induction $V_{core}(t)$ can be expressed as equation (8):

$$V_{core}(t) = R_{sh} \times \frac{M_{sh/c}}{L_{sh} - M_{sh/sn}} \times \frac{I_{\text{CP}}(0) \times length}{2} \times e^{\left(-\frac{R_{sh}}{L_{sh} - M_{sh/sn}} \cdot t\right)} \qquad (8)$$

where $M_{sh/c}$ is the mutual inductance between the cable shielding 430 and the cable core 440.

The time-varying voltage developed on the cable core 440 via magnetic induction $V_{core}(t)$ of equation (8) can be compared to the voltage induced on the cable core 440 when a conventional signal return network system is implemented. This comparison is more easily performed in the frequency domain, where the frequency-dependent voltage developed on the cable core 440 via magnetic induction $V_{core}(\omega)$ can be expressed by equation (9):

$$V_{core}(\omega) = R_{sh} \times \frac{M_{sh/c}}{L_{sh} - M_{sh/sn}} \times \frac{I_{\text{CP}}(0) \times length}{2} \times \frac{\frac{R_{sh}}{L_{sh} - M_{sh/sn}} - j\omega}{\omega^2 + \left(\frac{R_{sh}}{L_{sh} - M_{sh/sn}}\right)^2} \qquad (9)$$

where $\omega$ is angular frequency, such that $\omega = 2\pi f$, where *f* is frequency.

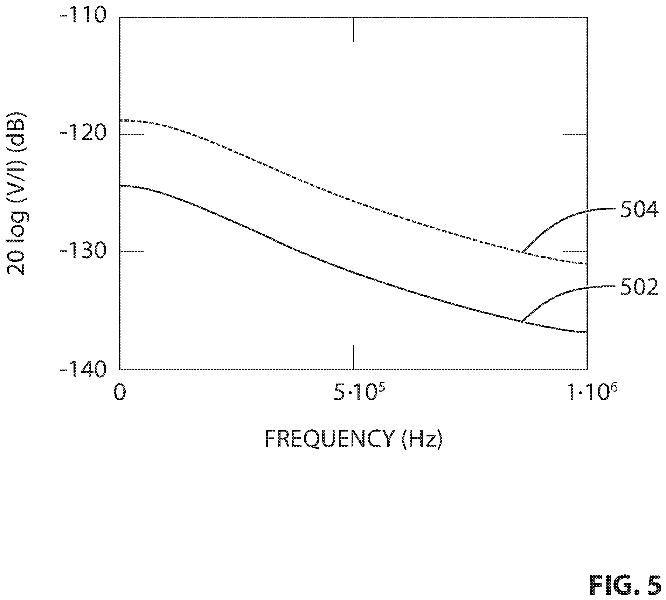

With reference to Figure 5, results of a comparison of an example response of aircraft 10 with the embodiment of Figure 2 and a conventional aircraft, to an exterior current 300 is shown, with the example response of aircraft 10 shown as line 502, and the response of the conventional aircraft shown as line 504. Thus, as discussed hereinabove, in certain embodiments, the induced currents to which the electrical systems 230 are subjected may be up to 6 dB (decibel) lower than those to which the electrical systems 230 would be subjected in the conventional aircraft.

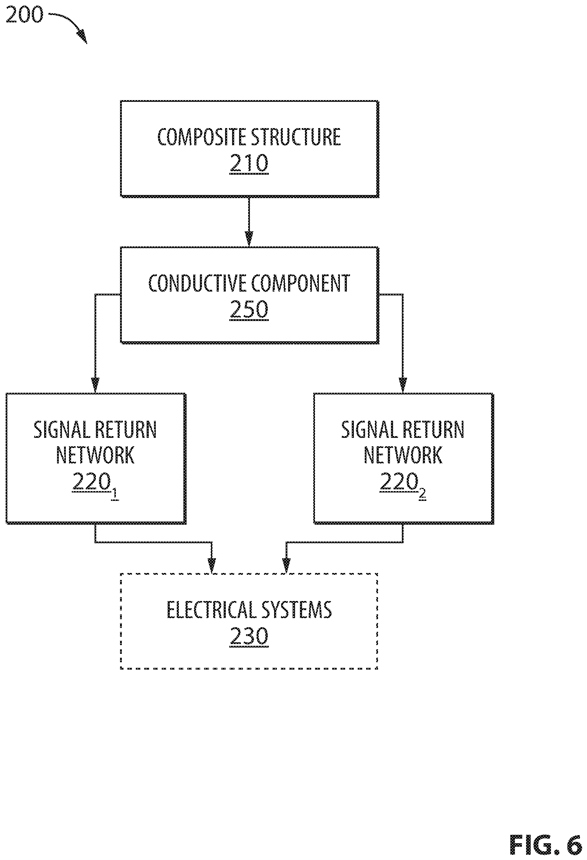

With reference to Figure 6, the aircraft 10 includes a system 200 for reducing current flow to one or more electrical systems 230 of the aircraft 10. The system 200 includes the composite structure 210, the conductive component 250, the first and second branches of the signal return network $220_1$, $220_2$, and optionally the electrical systems 230 themselves. The conductive component 250 is attached to the composite structure 210 to split the exterior current 300 into a structure current travelling along the composite structure 210, for example the second structure current 320, and the conductive path current 330 travelling along the conductive component 250. The signal return network 220 is attached to the conductive component 250 to electrically couple the two branches $220_1$, $220_2$ of the signal return network 220 to the composite structure 210 in order to split the conductive path current 330 into first and second signal return network currents 342, 344 which are routed through the signal return network 220 in opposite directions toward the at least one electrical system 230. The system 200 can also include the first and second non-conductive components 240 which are attached between the signal return network 220 and the composite structure 210 at the first and second attachment points 242, 244, respectively.

The exterior current 300 strikes the composite structure 210, and a portion of the exterior current 300 is redirected along the conductive component 250 as the conductive path current 330. The conductive path current 330 travelling along the conductive component 250 is split between the two branches of the signal return network $220_1$, $220_2$, and both signal return network currents 342, 344 travelling along the branches of the signal return network $220_1$, $220_2$ then travel to the electrical systems 230.

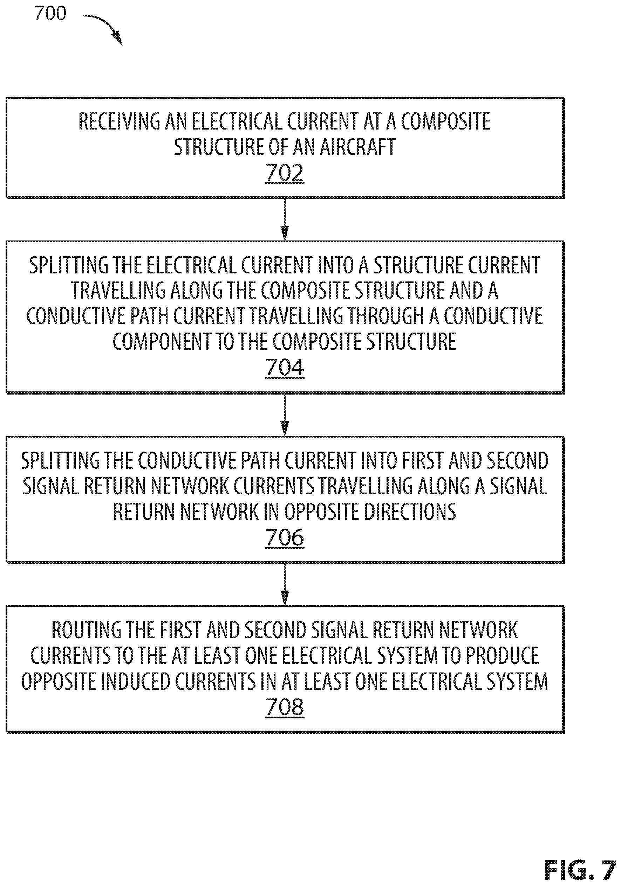

With reference to Figure 7, a method 700 is shown for reducing current flow to the electrical systems 230 of the aircraft 10. At step 702, an electrical current, such as the exterior current 300, is received at the composite structure 210 of the aircraft 10. The received current travels along the composite structure 210 as the first structure current 310.

At step 704, the received current, for example travelling along the composite structure 210 as the first structure current 310, is split into the second structure current 320 which travels along the composite structure 210 and the conductive path current 330 which travels along the conductive component 250. In some embodiments, the impedance of the conductive component 250 is greater than the impedance of the composite structure 210, and thus a magnitude of the second structure current 320 is greater than a magnitude of the conductive path current 330.

At step 706, the conductive path current 330 is split into the first and second signal return network currents 342, 344 which travel along the signal return network 220 in opposite directions. The conductive path current 330 can be split by attaching the signal return network 220 to the composite structure 210 via the first and second non-conductive components 240 at the first and second attachment points 242, 244, and via the conductive component 250 at the third attachment point 246. In some embodiments, the conductive path current 330 is split substantially at a midpoint of the signal return network 220. In other embodiments, the conductive path 250 is a sole electrical path from the composite structure 210 to the signal return network 220, and the remainder of the signal return network 220 is electrically floating.

At step 708, the first and second signal return network currents 342, 344 are routed to the electrical systems 230 to produce opposite induced currents in the electrical systems 230. Thus, implementation of the method 700 can cause magnetic fluxes and voltages to be generated as described hereinabove. This serves to reduce the induced voltage generated at the electrical systems 230, which in turn can lead to lowered requirements for cable shielding for the electrical systems 230. In certain embodiments, the first and second signal return network currents 342, 344 have substantially equal magnitudes.

Various aspects of the systems for reducing current flow to electrical systems of an aircraft disclosed herein, as well as the aircraft itself, may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention as defined by claims 1 or 9. The scope of the following claims should not be limited by the preferred embodiments set forth in the examples, but should be given the broadest reasonable interpretation consistent with the description as a whole.

**Claims**

1.  An aircraft (10), comprising:

    a composite structure (210);
    a signal return network (220) spaced from the composite structure (210);

a first non-conductive component (240) attached between the signal return network (220) and the composite structure (210) at a first attachment point (242);

a second non-conductive component (240) attached between the signal return network (220) and the composite structure (210) at a second attachment point (244); and

a conductive component (250) attached between the signal return network (220) and the composite structure (210) at a third attachment point (246) for electrically coupling the signal return network (220) to the composite structure (210) to split the conductive path current into first and second signal return network currents which are routed though the signal return network (220) in opposite directions toward at least one electrical system (230) of the aircraft;

wherein the conductive component (250) is a sole electrical path from the composite structure (210) to the signal return network (220), and wherein the remainder of the signal return network is electrically floating.

2. An aircraft (10) as claimed in claim 1, wherein the third attachment point (246) is located substantially at a midpoint of the signal return network (220).

3. An aircraft (10) as claimed in claim 1 or 2, wherein the first and second attachment points (242, 244) are respectively located at first and second ends of the signal return network (220).

4. An aircraft (10) as claimed in any preceding claim, further comprising:

at least one electrical system (230) located within the aircraft; and
at least one electrical connector for electrically coupling the electrical system (230) to the signal return network (220).

5. An aircraft (10) as claimed in any preceding claim, wherein the signal return network (220) is spaced at least 25.4 mm (one inch) from the composite structure (210).

6. An aircraft (10) as claimed in any preceding claim, wherein:

an impedance of the composite structure (210) is less than an impedance of a path including the conductive component (250) and the signal return network (220) as viewed from the third attachment point (246); or
an impedance of the signal return network (220) between the third attachment point (246) and the first attachment point (242) is substantially equal to an impedance of the signal return network (220) between the third attachment point (246) and the second attachment point (244).

7. An aircraft (10) as claimed in any preceding claim, wherein a total magnetic flux $\phi_{TOT}$ generated in a closed electrical loop of the signal return network (220) and a cable connected to the signal return network, the cable having a shielding and a core, is defined as

$$\phi_{TOT} = M_{sh/srn} \times \ell \times \frac{I_{SRN}}{2},$$

where $M_{sh/snr}$ is a mutual inductance between the cable shielding and the signal return network, $\ell$ is the length of the signal return network, and $I_{SRN}$ is a current received by the signal return network.

8. An aircraft (10) as claimed in claim 7, wherein a time-varying voltage induced in the cable core $V_{inc}(t)$ is defined as

$$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}} \cdot t},$$

where t is time, $R_{sh}$ is a cable shielding transfer resistance, $L_{sh}$ is a cable shielding transfer inductance, $M_{sh/c}$ is a mutual inductance between the cable shielding and the cable core, $I_{SRN}(0)$ is a current in the signal return network at a time t = 0.

9. A system for reducing current flow to at least one electrical system (230) of an aircraft (10), comprising:

a composite structure (210) for receiving an electrical current;

a conductive component (250) attached to the composite structure (210) for splitting the electrical current into a structure current travelling along the composite structure (210) and a conductive path current travelling along the conductive component (250);

a signal return network (220) spaced from the composite structure (210) and attached to the conductive component (250) to electrically couple the signal return network to the composite structure (210) to split the conductive path current into first and second signal return network currents which are routed through the signal return network (220) in opposite directions toward the at least one electrical system (230); and

first and second non-conductive components (240) attached between the signal return network (220) and the composite structure (210) at first and second attachment points (242, 244), respectively;

wherein the conductive component (250) is a sole electrical path from the composite structure (210) to the signal return network (220), and wherein the remainder of the signal return network (220) is electrically floating.

10. A system as claimed in claim 9, wherein the signal return network (220) is attached to the conductive component (250) at a third attachment point (246) located substantially at a midpoint of the signal return network (220).

11. A system as claimed in claim 9 or claim 10, wherein the first and second attachment points (242, 244) are respectively located at the first and second ends of the signal return network (220).

12. A system as claimed in any of claims 9 to 11, wherein the signal return network (220) is spaced at least 25.4 mm (one inch) from the composite structure (210).

13. A system as claimed in any of claims 9 to 12, wherein:

an impedance of the composite structure (210) is less than an impedance of a path including the conductive component (250) and the signal return network (220) as viewed from the third attachment point (246); and/or an impedance of the signal return network (220) between the conductive component (250) and the first attachment point (242) is substantially equal to an impedance of the signal return network (220) between the conductive component (250) and the second attachment point (244).

14. A system as claimed in any of claims 9 to 13, wherein a total magnetic flux $\phi_{TOT}$ generated in a closed electrical loop of the signal return network (220) and a cable connected to the signal return network, the cable having a shielding and a core, is defined as

$$\phi_{TOT} = M_{sh/srn} \times \ell \times \frac{I_{SRN}}{2},$$

where $M_{sh/snr}$ is a mutual inductance between the cable shielding and the signal return network, $\ell$ is the length of the signal return network, and $I_{SRN}$ is a current received by the signal return network.

15. A system as claimed in claim 14, wherein a time-varying voltage induced in the cable core $V_{inc}(t)$ is defined as

$$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}} \cdot t},$$

where t is time, $R_{Sh}$ is a cable shielding transfer resistance, $L_{sh}$ is a cable shielding transfer inductance, $M_{sh/c}$ is a mutual inductance between the cable shielding and the cable core, $I_{SRN}(0)$ is a current in the signal return network at a time t = 0.

**Patentansprüche**

1. Flugzeug (10), umfassend:

eine Composite-Struktur (210);
ein Signalrücklaufnetzwerk (220), das von der Composite-Struktur (210) beabstandet ist;
eine erste nicht leitende Komponente (240), die zwischen dem Signalrücklaufnetzwerk (220) und der Composite-Struktur (210) an einem ersten Befestigungspunkt (242) angebracht ist;

eine zweite nicht leitende Komponente (240), die zwischen dem Signalrücklaufnetzwerk (220) und der Composite-Struktur (210) an einem zweiten Befestigungspunkt (244) angebracht ist; und

eine leitende Komponente (250), die zwischen dem Signalrücklaufnetzwerk (220) und der Composite-Struktur (210) an einem dritten Befestigungspunkt (246) zur elektrischen Kopplung des Signalrücklaufnetzwerks (220) an die Composite-Struktur (210) befestigt ist, um den leitenden Stromwegstrom in erste und zweite Signalrücklaufströme zu spalten, die durch das Signalrücklaufnetzwerk (220) in entgegengesetzte Richtungen in Richtung zumindest eines elektrischen Systems (230) des Flugzeugs geleitet werden;

wobei die leitende Komponente (250) ein einzelner elektrischer Pfad von der Composite-Struktur (210) zum Signalrücklaufnetzwerk (220) ist, und wobei der Rest des Signalrücklaufnetzwerks elektrisch schwebend ist.

2. Flugzeug (10) wie in Anspruch 1 beansprucht, wobei sich der dritte Befestigungspunkt (246) im Wesentlichen an einem Mittelpunkt des Signalrücklaufnetzwerks (220) befindet.

3. Flugzeug (10) wie in Anspruch 1 oder 2 beansprucht, wobei sich die ersten und zweiten Befestigungspunkte (242, 244) an ersten bzw. zweiten Enden des Signalrücklaufnetzwerks (220) befinden.

4. Flugzeug (10) wie in einem vorhergehenden Anspruch beansprucht, ferner umfassend:

zumindest ein elektrisches System (230), das sich innerhalb des Flugzeugs befindet; und

zumindest einen elektrischen Verbinder zum elektrischen Koppeln des elektrischen Systems (230) an das Signalrücklaufnetzwerk (220).

5. Flugzeug (10) wie in einem vorhergehenden Anspruch beansprucht, wobei das Signalrücklaufnetzwerk (220) zumindest 25,4 mm (einen Zoll) von der Composite-Struktur (210) beabstandet ist.

6. Flugzeug (10) wie in einem vorhergehenden Anspruch beansprucht, wobei:

eine Impedanz der Composite-Struktur (210) geringer als eine Impedanz eines Pfades ist, der die leitende Komponente (250) und das Signalrücklaufnetzwerk (220), wie vom dritten Befestigungspunkt (246) aus betrachtet, einschließt; oder

eine Impedanz des Signalrücklaufnetzwerks (220) zwischen dem dritten Befestigungspunkt (246) und dem ersten Befestigungspunkt (242) im Wesentlichen gleich einer Impedanz des Signalrücklaufnetzwerks (220) zwischen dem dritten Befestigungspunkt (246) und dem zweiten Befestigungspunkt (244) ist.

7. Flugzeug (10) wie in einem vorhergehenden Anspruch beansprucht, wobei ein gesamter magnetischer Fluss $\phi_{TOT}$, der in einer geschlossenen elektrischen Schleife des Signalrücklaufnetzwerks (220) und einem Kabel generiert wird, das mit dem Signalrücklaufnetzwerk verbunden ist, wobei das eine Abschirmung und eine Ader aufweisende Kabel definiert ist als

$$\phi_{TOT} = M_{sh/srn} \times \ell \times \frac{I_{SRN}}{2},$$

wobei $M_{sh}/_{snr}$ eine Gegeninduktivität zwischen der Kabelabschirmung und dem Signalrücklaufnetzwerk ist, $\ell$ die Länge des Signalrücklaufnetzwerks ist, und $I_{SRN}$ ein vom Signalnetzwerk empfangener Strom ist.

8. Flugzeug (10) wie in Anspruch 7 beansprucht, wobei eine zeitlich veränderliche Spannung, die in der Kabelader $V_{inc}(t)$ induziert wird, definiert ist als

$$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}}t},$$

wobei $t$ Zeit ist, $Rsh$ ein Übertragungswiderstand der Kabelabschirmung ist, $L_{sh}$ eine Übertragungsinduktivität der Kabelabschirmung ist, $M_{sh/c}$ eine Gegeninduktivität zwischen der Kabelabschirmung und der Kabelader ist, $I_{SRN}(0)$ ein Strom im Signalrücklaufnetzwerk zu einer Zeit $t = 0$ ist.

9. System zur Reduzierung von Stromfluss zu zumindest einem elektrischen System (230) eines Flugzeugs (10), umfassend:

eine Composite-Struktur (210) zum Empfangen eines elektrischen Stroms;

eine leitende Komponente (250), die an der Composite-Struktur (210) befestigt ist, um den elektrischen Strom in einen Strukturstrom, der entlang der Composite-Struktur (210) läuft und einen leitenden Pfadstrom zu spalten, der entlang der leitenden Komponente (250) läuft;

ein Signalrücklaufnetzwerk (220), das von der Composite-Struktur (210) beabstandet und an der leitenden Komponente (250) befestigt ist, um das Signalrücklaufnetzwerk elektrisch an die Composite-Struktur (210) zu koppeln, um den leitenden Stromwegstrom in erste und zweite Signalrücklaufnetzwerkströme zu spalten, die durch das Signalrücklaufnetzwerk (220) in entgegengesetzte Richtungen in Richtung des zumindest einen elektrischen Systems (230) geleitet werden; und

erste und zweite nicht leitende Komponenten (240), die zwischen dem Signalrücklaufnetzwerk (220) und der Composite-Struktur (210) an ersten bzw. zweiten Befestigungspunkten (242, 244) befestigt sind;

wobei die leitende Komponente (250) ein einzelner elektrischer Pfad von der Composite-Struktur (210) zum Signalrücklaufnetzwerk (220) ist, und wobei der Rest des Signalrücklaufnetzwerks (220) elektrisch schwebend ist.

10. System wie in Anspruch 9 beansprucht, wobei das Signalrücklaufnetzwerk (220) an die leitende Komponente (250) an einem dritten Befestigungspunkt (246) befestigt ist, der sich im Wesentlichen an einem Mittelpunkt des Signalrücklaufnetzwerks (220) befindet.

11. System wie in einem wie in Anspruch 9 oder Anspruch 10 beansprucht, wobei sich die ersten und zweiten Befestigungspunkte (242, 244) an ersten bzw. zweiten Enden des Signalrücklaufnetzwerks (220) befinden.

12. System wie in einem der Ansprüche 9 bis 11 beansprucht, wobei das Signalrücklaufnetzwerk (220) zumindest 25,4 mm (einen Zoll) von der Composite-Struktur (210) beabstandet ist.

13. System wie in einem der Ansprüche 9 bis 12 beansprucht, wobei:

eine Impedanz der Composite-Struktur (210) geringer als eine Impedanz eines Pfades ist, der die leitende Komponente (250) und das Signalrücklaufnetzwerk (220), wie vom dritten Befestigungspunkt (246) aus betrachtet, einschließt; und/oder

eine Impedanz des Signalrücklaufnetzwerks (220) zwischen der leitenden Komponente (250) und dem ersten Befestigungspunkt (242) im Wesentlichen gleich einer Impedanz des Signalrücklaufnetzwerks (220) zwischen der leitenden Komponente (250) und dem zweiten Befestigungspunkt (244) ist.

14. System wie in einem der Ansprüche 9 bis 13 beansprucht, wobei ein gesamter magnetischer Fluss $\phi_{TOT}$, der in einer geschlossenen elektrischen Schleife des Signalrücklaufnetzwerks (220) und einem Kabel generiert wird, das mit dem Signalrücklaufnetzwerk verbunden ist, wobei das eine Abschirmung und eine Ader aufweisende Kabel definiert ist als

$$\phi_{TOT} = M_{sh/srn} \times \ell \times \frac{I_{SRN}}{2},$$

wobei $M_{sh/snr}$ eine Gegeninduktivität zwischen der Kabelabschirmung und dem Signalrücklaufnetzwerk ist, $\ell$ die Länge des Signalrücklaufnetzwerks ist, und $I_{SRN}$ ein vom Signalrücklaufnetzwerk empfangener Strom ist.

15. System wie in Anspruch 14 beansprucht, wobei eine zeitlich veränderliche Spannung, die in der Kabelader $V_{inc}(t)$ induziert wird, definiert ist als

$$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}}t},$$

wobei $t$ Zeit ist, $Rsh$ ein Übertragungswiderstand der Kabelabschirmung ist, $L_{sh}$ eine Übertragungsinduktivität der Kabelabschirmung ist, $M_{sh/c}$ eine Gegeninduktivität zwischen der Kabelabschirmung und der Kabelader ist, $I_{SRN}(0)$ ein Strom im Signalrücklaufnetzwerk zu einer Zeit $t = 0$ ist.

**Revendications**

1. Un aéronef (10), comprenant :

   une structure composite (210),
   un réseau de retour de signal (220) espacé de la structure composite (210),
   un premier composant non conducteur (240) fixé entre le réseau de retour de signal (220) et la structure composite (210) au niveau d'un premier point de fixation (242),
   un deuxième composant non conducteur (240) fixé entre le réseau de retour de signal (220) et la structure composite (210) au niveau d'un deuxième point de fixation (244), et
   un composant conducteur (250) fixé entre le réseau de retour de signal (220) et la structure composite (210) au niveau d'un troisième point de fixation (246) destiné à un couplage électrique du réseau de retour de signal (220) à la structure composite (210) de façon à diviser le courant de trajet conducteur en un premier et un deuxième courants de réseau de retour de signal qui sont acheminés au travers du réseau de retour de signal (220) dans des directions opposées vers au moins un système électrique (230) de l'aéronef, où le composant conducteur (250) est un trajet électrique unique de la structure composite (210) au réseau de retour de signal (220), et où la partie restante du réseau de retour de signal est électriquement flottante.

2. Un aéronef (10) selon la Revendication 1, où le troisième point de fixation (246) se situe sensiblement au niveau d'un point médian du réseau de retour de signal (220).

3. Un aéronef (10) selon la Revendication 1 ou 2, où les premier et deuxième points de fixation (242, 244) se situent respectivement à une première et une deuxième extrémités du réseau de retour de signal (220).

4. Un aéronef (10) selon l'une quelconque des Revendications précédentes, comprenant en outre :

   au moins un système électrique (230) situé à l'intérieur de l'aéronef, et
   au moins un connecteur électrique destiné à un couplage électrique du système électrique (230) au réseau de retour de signal (220).

5. Un aéronef (10) selon l'une quelconque des Revendications précédentes, où le réseau de retour de signal (220) est espacé d'au moins 25,4 mm de la structure composite (210).

6. Un aéronef (10) selon l'une quelconque des Revendications précédentes, où :

   une impédance de la structure composite (210) est inférieure à une impédance d'un trajet comprenant le composant conducteur (250) et le réseau de retour de signal (220) tel que vu à partir du troisième point de fixation (246), ou
   une impédance du réseau de retour de signal (220) entre le troisième point de fixation (246) et le premier point de fixation (242) est sensiblement égale à une impédance du réseau de retour de signal (220) entre le troisième point de fixation (246) et le deuxième point de fixation (244).

7. Un aéronef (10) selon l'une quelconque des Revendications précédentes, où un flux magnétique total $\phi_{TOT}$ généré dans une boucle électrique fermée du réseau de retour de signal (220) et un câble raccordé au réseau de retour de signal, le câble possédant un blindage et un noyau, est défini sous la forme

$$\phi_{TOT} = M_{sh/srn} \times \ell \times \frac{I_{SRN}}{2},$$

où $M_{sh}/_{snr}$ est une inductance mutuelle entre le blindage de câble et le réseau de retour de signal, $\ell$ est la longueur du réseau de retour de signal et $I_{SRN}$ est un courant reçu par le réseau de retour de signal.

8. Un aéronef (10) selon la Revendication 7, où une tension variant avec le temps induite dans le noyau de câble $V_{inc}(t)$ est définie sous la forme

$$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}}t},$$

où $t$ est le temps, $R_{sh}$ est une résistance de transfert de blindage de câble, $L_{sh}$ est une inductance de transfert de blindage de câble, $M_{sh/c}$ est une inductance mutuelle entre le blindage de câble et le noyau de câble, $I_{SRN}(0)$ est un courant dans le réseau de retour de signal à un instant $t = 0$.

9.  Un système de réduction d'un flux de courant vers au moins un système électrique (230) d'un aéronef (10), comprenant :

    une structure composite (210) destinée à la réception d'un courant électrique,
    un composant conducteur (250) fixé à la structure composite (210) destiné à la division du courant électrique en un courant de structure circulant le long de la structure composite (210) et un courant de trajet conducteur circulant le long du composant conducteur (250),
    un réseau de retour de signal (220) espacé de la structure composite (210) et fixé au composant conducteur (250) destiné à un couplage électrique du réseau de retour de signal à la structure composite (210) de façon à diviser le courant de trajet conducteur en un premier et un deuxième courants de réseau de retour de signal qui sont acheminés au travers du réseau de retour de signal (220) dans des directions opposées vers le au moins un système électrique (230), et
    des premier et deuxième composants non conducteurs (240) fixés entre le réseau de retour de signal (220) et la structure composite (210) au niveau d'un premier et d'un deuxième points de fixation (242, 244), respectivement,
    où le composant conducteur (250) est un trajet électrique unique de la structure composite (210) au réseau de retour de signal (220), et où la partie restante du réseau de retour de signal (220) est électriquement flottante.

10. Un système selon la Revendication 9, où le réseau de retour de signal (220) est fixé au composant conducteur (250) au niveau d'un troisième point de fixation (246) situé sensiblement à un point médian du réseau de retour de signal (220).

11. Un système selon la Revendication 9 ou 10, où les premier et deuxième points de fixation (242, 244) se situent respectivement à une première et une deuxième extrémités du réseau de retour de signal (220).

12. Un système selon l'une quelconque des Revendications 9 à 11, où le réseau de retour de signal (220) est espacé d'au moins 25,4 mm de la structure composite (210).

13. Un système selon l'une quelconque des Revendications 9 à 12, où :

    une impédance de la structure composite (210) est inférieure à une impédance d'un trajet comprenant le composant conducteur (250) et le réseau de retour de signal (220) tel que vu à partir du troisième point de fixation (246), et/ou
    une impédance du réseau de retour de signal (220) entre le composant conducteur (250) et le premier point de fixation (242) est sensiblement égale à une impédance du réseau de retour de signal (220) entre le composant conducteur (250) et le deuxième point de fixation (244).

14. Un système selon l'une quelconque des Revendications 9 à 13, où un flux magnétique total $\phi_{TOT}$ généré dans une boucle électrique fermée du réseau de retour de signal (220) et un câble raccordé au réseau de retour de signal, le câble possédant un blindage et un noyau, est défini sous la forme

$$\phi_{TOT} = M_{sh/srn} \times \ell \times \frac{I_{SRN}}{2},$$

où $M_{sh}/_{snr}$ est une inductance mutuelle entre le blindage de câble et le réseau de retour de signal, $\ell$ est la longueur du réseau de retour de signal et $I_{SRN}$ est un courant reçu par le réseau de retour de signal.

15. Un système selon la Revendication 14, où une tension variant avec le temps induite dans le noyau de câble $V_{inc}(t)$ est définie sous la forme

$$V_{inc}(t) = R_{sh} \times \frac{M_{sh/c}}{L_{sh} - M_{sh/srn}} \times \frac{I_{SRN}(0) \times \ell}{2} \times e^{-\frac{R_{sh}}{L_{sh} - M_{sh/srn}}t},$$

où $t$ est le temps, $R_{sh}$ est une résistance de transfert de blindage de câble, $L_{sh}$ est une inductance de transfert de blindage de câble, $M_{sh/c}$ est une inductance mutuelle entre le blindage de câble et le noyau de câble, $I_{SRN}(0)$ est un courant dans le réseau de retour de signal à un instant $t = 0$.

FIG. 1

EP 3 538 440 B1

FIG. 2

**FIG. 3A**

**FIG. 3B**

**FIG. 3C**

**FIG. 3D**

EP 3 538 440 B1

17

FIG. 4

FIG. 5

FIG. 6

700

RECEIVING AN ELECTRICAL CURRENT AT A COMPOSITE
STRUCTURE OF AN AIRCRAFT
702

SPLITTING THE ELECTRICAL CURRENT INTO A STRUCTURE CURRENT
TRAVELLING ALONG THE COMPOSITE STRUCTURE AND A
CONDUCTIVE PATH CURRENT TRAVELLING THROUGH A CONDUCTIVE
COMPONENT TO THE COMPOSITE STRUCTURE
704

SPLITTING THE CONDUCTIVE PATH CURRENT INTO FIRST AND SECOND
SIGNAL RETURN NETWORK CURRENTS TRAVELLING ALONG A SIGNAL
RETURN NETWORK IN OPPOSITE DIRECTIONS
706

ROUTING THE FIRST AND SECOND SIGNAL RETURN NETWORK
CURRENTS TO THE AT LEAST ONE ELECTRICAL SYSTEM TO PRODUCE
OPPOSITE INDUCED CURRENTS IN AT LEAST ONE ELECTRICAL SYSTEM
708

FIG. 7

**EP 3 538 440 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010213312 A
- US 2006146473 A
- US 2011259999 A
- US 2010127564 A